Europäisches Patentamt

European Patent Office

Office européen des brevets

(19)

(11) **EP 0 921 664 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(51) Int Cl.⁷: **H04L 25/49**, H04L 25/03

(21) Anmeldenummer: **98402567.6**

(22) Anmeldetag: **15.10.1998**

(54) **Verfahren zur digitalen Nachrichtenübertragung**

Method for digital information transmission

Procédé de transmission d'information numérique

(84) Benannte Vertragsstaaten:
**BE DE ES FR GB IT SE**

(30) Priorität: **03.11.1997 DE 19748363**
**07.08.1998 DE 19835760**

(43) Veröffentlichungstag der Anmeldung:
**09.06.1999 Patentblatt 1999/23**

(73) Patentinhaber: **ALCATEL**
**75008 Paris (FR)**

(72) Erfinder:
• **Huber, Johannes, Prof. Dr.-Ing.**
**91094 Langensendelbach (DE)**
• **Fischer, Robert, Dr.-Ing.**
**91052 Erlangen (DE)**
• **Gerstacker, Wolfgang, Dipl.-Ing.**
**90482 Nürnberg (DE)**

(74) Vertreter: **Rausch, Gabriele et al**
**Alcatel**
**Intellectual Property Group,**
**Stuttgart**
**70430 Stuttgart (DE)**

(56) Entgegenhaltungen:
**EP-A- 0 314 360**

• **IEEE JOURNAL ON SELECTED AREAS IN COMMUNICATIONS, Band 13, Nr.9, Dezember 1995, Seiten 1622-1633, FISCHER, R.F.H.: "Dynamics limited precoding, shaping, and blind equalization for fast digital transmission over twisted pair lines", XP002900941**

**Beschreibung**

Die Erfindung bezieht sich auf ein Verfahren zur leitungsgebundenen digitalen Nachrichtenübertragung, bei welchem digitale Signale sendeseitig mit einem festen Vorcodierer vorcodiert werden und bei welchem die Signale empfangsseitig durch Blindentzerrung zurückgewonnen werden (US-Z IEEE Joumal on Selected Areas in Communications", vol. SAC-13, Dezember 1995, Seiten 1622 bis 1633).

Dieses Verfahren ist sowohl bei der leitungsgebundenen Nachrichtenübertragung einsetzbar, als auch bei der Übertragung mittels Funk. Hauptanwendungsgebiet ist die leitungsgebundene Übertragung, auf welche sich die weiteren Ausführungen beziehen, ohne daß dadurch die allgemeine Gültigkeit eingeschränkt wird.

Schnelle digitale Übertragungsverfahren über Kupferkabel, in denen mehrere bzw. sehr viele sogenannte Zweidrahtleitungen (das sind zwei Adem) nebeneinander liegen, sind von hohem aktuellem Interesse, da mit ihnen eine Vielzahl von neuen digitalen Diensten in der nahen Zukunft eingeführt werden kann. Es wird dadurch außerdem ein gradueller Übergang zu Glasfasemetzen ermöglicht. Dabei soll eine möglichst große Kabellänge überbrückt werden können, da auf dem Weg von der Vermittlungsstelle eines Femmeldenetzes bis zum Teilnehmer aus wirtschaftlichen Gründen weitgehend auf Zwischenverstärker verzichtet werden soll.

Bei der leitungsgebundenen Übertragung nachrichtentechnischer Signale entstehen durch Dämpfung und Verzerrungen kanalbedingte Intersymbolinterferenzen (ISI). Zur Beseitigung der ISI hat sich eine Entzerrung mit Entscheidungsrückkopplung (Decision-Feedback-Equalization, DFE) in der digitalen Nachrichtenübertragung als sehr wirksam erwiesen. Dieses Verfahren hat eine hohe Leistungsfähigkeit bei geringer Komplexität. Eine direkte Kombination mit codierter Modulation ist jedoch beim Einsatz von DFE nicht möglich ist, da für das Rückkopplungsfilter der DFE sofortige Entscheidungen über die gesendeten Signale benötigt werden. Eine Lösung dieses Problems wird von Tomlinson (US-Z Electronics Letters", vol. 7, März 1971, Seiten 138 und 139) bzw. Harashima/Miyakawa (US-Z "IEEE Transactions on Communications", vol. COM-20, August 1972, Seiten 774 bis 780) angegeben. Dabei wird das Rückkopplungsfilter der DFE in den Sender verlagert. Zusätzlich wird eine Modulo-Operation zur Amplitudenbegrenzung eingeführt. Dieses Verfahren wird als Tomlinson-Harashima-Vorcodierung (THP) bezeichnet. Allerdings erfordert eine Übertragung mit optimalem THP Kanalzustandsinformationen an der Sendeseite, die über einen Rückkanal übertragen werden müssen. Dies macht komplexe Protokolle beim Aufbau der Verbindung erforderlich, um eine gegenseitige Blockierung der beiden Übertragungsrichtungen zu vermeiden. Außerdem ist nicht bei jeder Anwendung ein Rückkanal vorhanden.

Um dieses Problem zu umgehen, ist es aus der eingangs erwähnten US-Z bekannt, einen festen Vorcodierer einzusetzen. Dadurch wird der Verbindungsaufbau deutlich erleichtert. Es entstehen durch die dann suboptimale Vorcodierung jedoch Restinterferenzen, die empfangsseitig linear entzerrt werden müssen. Die Adaption des linearen Entzerrers für die Restinterferenzen wird dabei blind, d. h. ohne den Einsatz einer Trainingssequenz vorgenommen. Blinde Entzerrung im Symboltakt jedoch ist bei einem System mit THP prinzipiell nicht möglich, da das zu rekonstruierende Signal hier in guter Näherung diskret gaußverteilt ist. Deswegen wird mit einer Begrenzung der Dynamik des effektiven Sendesignals eine Modifikation der Vorcodierung durchgeführt, die zu Signalen mit günstigerer Statistik führt. Ein solches Verfahren ist beispielweise das "Dynamics Shaping" (DS). Mit DS wird eine blinde Entzerrung ermöglicht, wobei die hohe Leistungseffizienz von THP beibehalten bzw. sogar noch gesteigert wird. In dieser US-Z ist außerdem festgestellt, daß bei uncodierter Übertragung mit DS ein einfaches Standardverfahren zur blinden Entzerrung, der Sato-Algorithmus (US-Z "IEEE Transactions on Communications, vol. COM-23 Juni 1975, Seiten 679 bis 682), eingesetzt werden kann.

Der Erfindung liegt die Aufgabe zugrunde, das eingangs geschilderte Verfahren so weiterzubilden, daß die blinde Entzerrung weiter verbessert wird.

Diese Aufgabe wird gemäß der Erfindung dadurch gelöst, daß die Blindentzerrung in eine Betragsentzerrung und eine nachfolgende Phasenentzerrung aufgeteilt wird.

Dieses Verfahren zur digitalen Nachrichtenübertragung ist einfach durchführbar. Dabei ist von wesentlicher Bedeutung, daß das im Entzerrer zurückzugewinnende Signal korreliert sein kann, im Gegensatz zu bekannten Verfahren, bei denen nur weiße Signale zurückgewonnen werden können. Das Verfahren arbeitet wegen fester Vorcodierung und zweistufiger blinder Entzerrung mit hoher Leistungsfähigkeit. Die Vorcodierung ist an eine feste Referenzapplikation angepaßt, womit eine Rückübertragung von Kanalzustandsinformation nicht erforderlich ist. Die deswegen auftretenden Restinterferenzen werden mittels blinder Entzerrung beseitigt. Hierzu werden eine Betragsentzerrung und eine nachfolgende, separate Phasenentzerrung eingesetzt. Die Betragsentzerrung berücksichtigt dabei eine in der Sendesequenz vorhandene Korrelation. Es ist dadurch eine robuste blinde Entzerrung möglich, auch bei sehr niedrigem Störabstand am Entzerrereingang. Von besonderer Bedeutung ist, daß wegen der vorangehenden Betragsentzerrung ein einfacher blinder Algorithmus in der Phasenentzerrung verwendet werden kann. Das führt zu einer schnellen Konvergenz, trotz starker Restinterferenzen am Eingang des Betragsentzerrers, niedrigem SNR (Signal to Noise Ratio) und korrelierter zu rekonstruierender Symbole.

Durch eine zusätzliche Codierung der Signale, beispielsweise eine Trelliscodierung, kann die überbrückbare Kabellänge deutlich gesteigert werden. Besonders in diesem Fall wirkt sich die der separaten Phasenentzerrung vorangehende Betragsentzerrung vorteilhaft aus, da sehr niedrige Störabstände am Entzerrereingang gegeben sind.

Das Verfahren nach der Erfindung wird anhand der Zeichnungen als Ausführungsbeispiel erläutert.

Es zeigen:

Fig. 1 ein Blockdiagramm einer leitungsgebundenen Übertragungsstrecke.
Fig. 2 eine Ergänzung des Blockdiagramms nach Fig. 1.
Fig. 3 eine zusätzliche Ausführungsform.

In der folgenden Beschreibung wird von einer digitalen Übertragung von Signalen bzw. Daten im Basisband ausgegangen. Alle Signale und Systeme sind dementsprechend reellwertig. Das Verfahren wird außerdem für den Fall beschrieben, daß die Signale zunächst codiert werden, vorzugsweise trelliscodiert. Dadurch ist die Erfindung aber nicht auf die zusätzliche Codierung eingeschränkt.

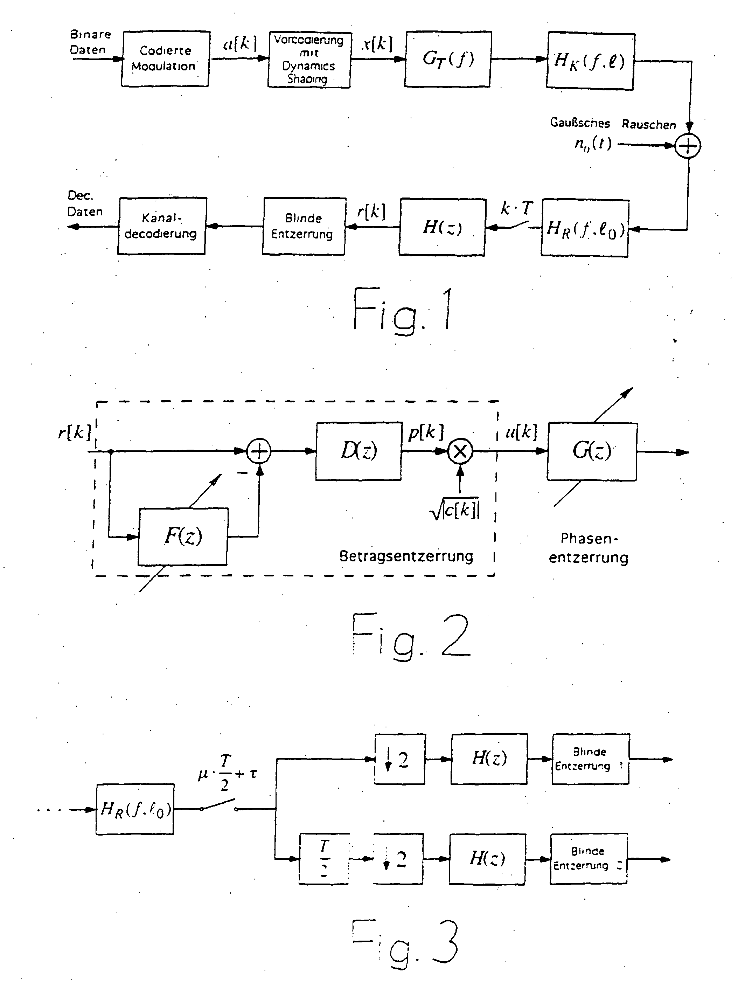

Die binären Daten werden gemäß Fig. 1 zunächst codiert, und zwar in einer Kanalcodierung, die eine Folge von M-wertigen PAM-Symbolen $a[k] \in \{\pm 1, \pm 3, .... \pm (M-1)\}$ erzeugt (PAM = Puls-Amplituden-Modulation). Die Folge $a[k]$ wird durch eine Vorcodierung mit Dynamikbegrenzung auf eine Folge $x[k]$ von Kanalsymbolen abgebildet. Die Folge $x[k]$ wird auf einen Sendeimpulsformer $G_T$ (f) gegeben und über eine Zweidrahtleitung eines Kupferkabels übertragen, das die Länge I und eine Übertragungsfunktion $H_K$ (f,I) hat. Eine Störung $n_o$ (t) im Übertragungsweg wird als gaußverteilt angenommen. Bei einer HDSL-Übertragung (High-Rate Digital Subscriber Lines) besteht sie beispielweise aus Nahnebensprechen, das von vielen anderen HDSL-Systemen herrührt, deren Signale auf parallelen Zweidrahtleitungen des gleichen Kabels übertragen werden.

Als Eingangsfilter des Empfängers wird ein optimales Nyquistfilter (ONF) $H_R$ (f,$l_o$) eingesetzt, das ohne sendeseitiges THP nach einer Abtastung im Symboltakt ein ISI-freies Signal erzeugen würde, solange die tatsächliche Kabellänge mit der Designlänge $l_o$ übereinstimmt, die für die Ausführung von Vorcodierer und Eingangsfilter angenommen wurde. Restinterferenzen entstehen für den Fall I = $I_o$. Hier wird angenommen, daß bis auf die Kabellänge 1 alle Parameter von tatsächlichen Verhältnissen und Referenzapplikation identisch sind. Da sonstige Parameterdifferenzen sehr gut durch äquivalente Längendifferenzen ausgedrückt werden können, stellt dies jedoch keine wesentliche Einschränkung dar.

Wegen der durch das ONF vorgenommenen linearen Entzerrung ist das abgetastete Signal durch stark gefärbtes Rauschen sehr hoher Varianz gestört. Eine Rauschreduktion kann nun durch ein nachgeschaltetes FIR-Filter H(z) vorgenommen werden, das die Aufgabe hat, die Störung möglichst weiß zu machen (Noise-Whitening-Filter). Die Koeffizienten dieses monischen, minimalphasigen Filters können nach der Forderung einer minimalen Geräuschvarianz am Filterausgang über die Yule-Walker-Gleichungen berechnet werden. Zur Berücksichtigung der bei einer Kabelübertragung vorhandenen Übertragerankopplung kann außerdem eine Nullstelle von H(z) bei DC (z=1) vorgeschrieben werden (DC = Direct Current).

Durch das Filter H(z), dessen Ausgangssignal mit r[k] bezeichnet ist, werden nun wieder ISI erzeugt, deren Beseitigung die Aufgabe des festen Vorcodierers ist. Im Fall von THP wird die Folge x[k] von Kanalsymbolen Symbol für Symbol erzeugt, gemäß der Vorschrift

$$x[k] = a[k] + 2M \cdot d[k] - \sum_{\kappa-1}^{q_h} h[\kappa]\, x[k-\kappa].$$

Dabei korrespondieren die Symbole $d[k] \in \mathbb{Z}$ mit der Modulo-Operation in THP. h [$\kappa$] bezeichnet die Impulsantwort des Noise-Whitening-Filters vom Grad $q_h$.

Für das weitere Verfahren wird eine effektive Datensequenz (EDS) v[k] definiert, gemäß

$$v[k] = a[k] + 2M \cdot d[k].$$

Damit ergibt sich die Folge x[k] durch Filterung von v[k] mit der formalen Inversen von H(z). Daraus folgt, daß nach dem Filter H(z) im rauschfreien Fall wieder die EDS vorliegt, solange I = $I_o$ gilt. Durch nochmalige Anwendung einer Modulo-Operation kann aus ihr die Folge a[k] von PAM-Symbolen eindeutig zurückgewonnen werden.

Die Vorcodierung kann außerdem so modifiziert werden, daß sich Signale mit günstigerer Statistik ergeben. Ein dazu geeignetes Verfahren ist das Dynamics Shaping (DS). Mit DS wird eine blinde Entzerrung ermöglicht, wobei die hohe Leistungseffizienz von THP noch gesteigert werden kann. Bei DS wird die Folge d[k] nicht Symbol für Symbol, sondern durch Betrachtung längerer Zeiträume ausgewählt, nach dem Kriterium einer minimalen Sendeleistung. Dabei soll die Nebenbedingung $|v[k]| \leq V_{max}$ eingehalten werden. $V_{max}$ ist die extern vorgeschriebene Maximalamplitude der EDS.

Eine Betrachtung des Leistungsdichtespektrums (LDS) der EDS zeigt jedoch, daß sowohl bei THP als auch bei DS zeitlich benachbarte Werte sehr stark korreliert sind. Diese Korrelation, die auch bei DS beachtliche hohe Stufenzahl der EDS sowie ein niedriges SNR am Entzerrereingang stellen hohe Anforderungen an die empfangsseitig durchzuführende blinde Entzerrung. Die Restinterferenzen werden durch einen linearen Entzerrer beseitigt, der die EDS $v[k]$ rekonstruiert und ohne Trainingssequenz, also blind, adaptiert wird. Eine direkte Rekonstruktion der Folge a [k] durch den Entzerrer ist wegen der nichtlinearen Modulo-Operationen im Vorcodierer nicht möglich.

Die blinde Entzerrung wird in eine Betragsentzerrung und in eine nachfolgende Phasenentzerrung aufgeteilt. Das führt gegenüber einer einstufigen Struktur zu einer verbesserten Leistungsfähigkeit der blinden Entzerrung. Eine entsprechende Struktur ist in Fig. 2 dargestellt. Darin sind F(z) ein Prädiktionsfilter, D(z) ein färbendes Filter und G(z) ein Phasenentzerrungsfilter.

Bei einer herkömmlichen Betragsentzerrung wird am Ausgang des Betragsentzerrers in bekannter Technik ein annähemd weißes Signal mit minimaler Varianz erzwungen. Ein weißes Ausgangssignal des Betragsentzerrers gewährleistet jedoch nur dann die Beseitigung der Betragsverzerrungen, wenn auch die Sendesequenz ein konstantes LDS hat. Ist dies nicht der Fall, so ist die Betragsentzerrung derart zu modifizieren, daß ihr Ausgangssignal das dann nichtkonstante LDS des zu rekonstruierenden Signals aufweist. Dazu werden im folgenden zwei Verfahren angegeben. Das erste erzeugt als Zwischengröße ein weißes Signal, das anschließend geeignet gefärbt wird. Das zweite stellt das gewünschte LDS bzw. die Autokorrelationsfolge (AKF) direkt ein. Beide Verfahren sind für korrelierte Sendesignale ausgelegt.

1. Variante der Betragsentzerrung

Mit einem als FIR-Filter vom Grad $q_f$ ausgeführten Prädiktionsfehlerfilter 1-F(z) wird ein annähemd weißes Signal erzeugt, das dann mit einem festen FIR-Filter D(z) derart gefärbt wird, daß an dessen Ausgang in guter Näherung das LDS der EDS gemessen werden kann. Zur Einstellung der Prädiktorkoeffizienten $f[k]$ können der LMS- oder auch der RLS-Algorithmus eingesetzt werden. Kriterium ist dabei die Minimierung der Leistung des Ausgangssignals des Prädiktionsfehlerfilters. Wird eine schnelle Konvergenz der ersten Stufe angestrebt, so sollte der RLS-Algorithmus gewählt werden.

Zur Bestimmung des färbenden Filters D(z) wird zuerst ein fiktives Prädiktionsfehlerfilter 1-W(z) für die EDS mit relativ hohem Grad $q_w$ als Lösung der Yule-Walker-Gleichungen ermittelt. Wenn weder Rauschen noch ISI vorhanden sind und $q_w = q_f$ gilt, sind die berechneten Koeffizienten identisch mit denen des Filters 1-F(z) nach abgeschlossener Adaption.

Das fiktive Filter 1 - W(z) würde aus der EDS eine annähemd weiße Sequenz erzeugen. Als färbendes Filter D(z) eignet sich nun das inverse System $\frac{1}{1-W(z)}$. Da das fiktive Filter 1 - W(z) minimalphasig und monisch ist, was generell für über die Yule-Walker-Gleichungen berechnete Prädiktionsfehlerfilter gilt, kann dieses inverse System ebenfalls durch ein kausales, minimalphasiges und monisches FIR-System approximiert werden. Die Yule-Walker-Gleichungen werden nun zur Bestimmung des färbenden Filters D(z) ein zweites Mal angewendet, und zwar mit der Zielstellung, ein Signal, das als AKF die Filter-AKF von 1-W(z) hat, möglichst weiß zu machen. Das färbende Filter D (z) hängt nur vom fest gewählten Vorcodierer ab. Es kann daher berechnet und fest eingestellt werden.

Durch das angegebene Vorgehen ist garantiert, daß sich ein minimalphasiges Filter D(z) ergibt. Da auch das Prädiktionsfehlerfilter 1 - F(z) nach Konvergenz minimalphasig ist, resultiert eine minimalphasige Gesamtübertragungsfunktion des Betragsentzerrers. Diese Eigenschaft ist vorteilhaft für die anschließende Phasenentzerrung, da der Phasengang der zu entzerrenden Übertragungsfunktion und damit auch der des inversen Systems bei der hier betrachteten Anwendung näher am Phasengang eines minimalphasigen als an dem eines maximalphasigen Systems liegt. Damit ist gewährleistet, daß die verbleibenden Phasenverzerrungen nach der Betragsentzerrung nicht zu stark sind. Nach dem Filter D(z) kann für eine vollständige Betragsentzerrung noch eine Korrektur mit einem Faktor $\sqrt{|c[k]|}$ vorgenommen werden, der adaptiv derart eingestellt wird, daß die Leistungen von $u[k]$ und $v[k]$ übereinstimmen. Dabei ist $u[k]$ das Ausgangssignal der AGC (Automatic Gain Control).

2. Variante der Betragsentzerrung

Die Betragsentzerrung wird mit einem einzigen Filter vorgenommen, dessen Koeffizienten adaptiv derart eingestellt werden, daß die gewünschte AKF der EDS direkt im Ausgang dieses Filters vorliegt, bis auf einen zulässigen Faktor, der wieder durch die AGC beseitigt werden kann. Ein Algorithmus, mit dem dies möglich ist, wird im folgenden beschrieben, wobei wieder die Struktur nach Fig. 2 vorausgesetzt wird, allerdings ohne färbendes Filter D(z).

Der (zeitabhängige) Koeffizientenvektor zu F(z),

$$f[k]= [f_1[k]\ f_2[k]\ ...\ fq\ [k]]^T,$$

wobei im Gegensatz zur bisherigen Darstellung die Koeffizientennummer nun als Index erscheint, wird rekursiv aktualisiert gemäß

$$f[k+1] = f[k] - \mu_f\ (|p[k]|^2\ \varphi - p[k]s[k]).$$

Dabei bezeichnet p[k] das Ausgangssignal von 1-F(z), s[k] einen Vektor mit den $q_f$ letzten Ausgangswerten,

$$s[k] = [p[k-1]\ p[k-2]\ ...\ p[k-q_f]]^T,$$

und φ einen Vektor mit den gewünschten (normierten) AKF-Werten des Filterausgangssignals,

$$\varphi = \left[\ \frac{\varphi_{vv}[1]}{\varphi_{vv}[0]} \quad \frac{\varphi_{vv}[2]}{\varphi_{vv}[0]} \quad \cdots \quad \frac{\varphi_{vv}[q_f]}{\varphi_{vv}[0]}\ \right]^T .$$

Die für eine Basisbandübertragung gültige Gleichung f[k+1] kann leicht für eine modulierte Übertragung, d. h. für komplexwertige Signale, modifiziert werden. Die ersten $q_f$+ 1 AKF-Werte von p[k] und v[k] stimmen nach Konvergenz bis auf einen Faktor überein, was bei nicht zu geringem $q_f$ hinreichend für eine näherungsweise komplette Übereinstimmung der AKF-Folgen ist. Der verbleibende Faktor kann anschließend wie oben schon erwähnt mit einer AGC korrigiert werden.

Nach Konvergenz des Verfahrens ist eine Betragsentzerrung gewährleistet. Obwohl das Verfahren einen Gradientenabstieg durchfuhrt. resultiert bei der Anwendung zur Restinterferenzentzerrung eine relativ schnelle Konvergenz, da mit dem Prädiktionsfehlerfilter 1 - F(z) im Gegensatz zum vorherigen Abschnitt nur die durch den Kanal erzeugte Korrelation, nicht aber die in der EDS enthaltene beseitigt werden soll.

Nach der Betragsentzerrung wird zur Beseitigung der nach der ersten Stufe noch im Signal verbliebenen ISI, die hauptsächlich durch Phasenverzerrungen bedingt sind, eine Phasenentzerrung durchgeführt. Dazu wird ein echt blindes Verfahren eingesetzt, mit dem ein weiteres FIR-Filter G(z) adaptiert wird. Dieser zweite Adaptionsprozeß wird erst nach Konvergenz der ersten Stufe gestartet. Dadurch wird eine negative Beeinflussung des zweiten Prozesses durch den ersten verhindert. Hier wird mit Vorteil der Sato-Algorithmus gewählt, und zwar eine nach einem Vorschlag von Benveniste modifizierte Variante, mit der während der Adaption ein gradueller Übergang zum DDLMS-Algorithmus erfolgt, was zu einer reduzierten Leistung des Fehlersignals im stationären Zustand führt.

Simulationen haben ergeben, daß die Phasenentzerrung in der zweiten Entzerrerstufe bei vorgeschalteter Betragsentzerrung auch dann konvergiert, wenn, bedingt durch eine große Kabellänge, ein sehr niedriges SNR vorliegt. Die Korrelation in der EDS wirkt sich aufgrund der durch die erste Stufe drastisch verringerten ISI ebenfalls nicht negativ aus. Nach Konvergenz wird die Adaption weitergeführt, um langsamen Kanaländerungen nachfolgen zu können. Die Koeffizienten des Prädiktionsfilters F(z) zur Betragsentzerrung dagegen können ab dem Beginn der Phasenentzerrung festgehalten werden.

Durch eine Modifikation der Empfängerstruktur kann die Leistungsfähigkeit des Verfahrens unempfindlich gegenüber einem Fehler in der Abtastphase gemacht werden. Dazu kann eine aus Fig. 3 ersichtliche Empfängerstruktur verwendet werden:

Nach Abtastung des Signals am Ausgang des ONF $H_R(f,l_o)$ im T/2-Abstand mit Abtastphase τ werden die Empfangswerte alternierend zwei getrennten Zweigen einer Filterbank zur Weiterverarbeitung zugeführt. Damit resultieren zwei T-spaced-Teilkanäle, deren Abtastphasen um T/2 gegeneinander versetzt sind. Eine Untersuchung des Verlaufes des SNR in beiden Teilkanälen nach Entzerrung mit jeweils dem optimalen linearen Entzerrer zeigt, daß bei beliebiger Phase bei der T/2-Abtastung zumindest einer der beiden T-spaced-Teilkanäle eine auf nahezu maximales SNR führende Lage hat. Es wird vorgeschlagen, in beiden Kanälen jeweils eine separate blinde Entzerrung durchzuführen. Damit können aus der Literatur bekannte Konvergenzprobleme bei blinder T/2-spaced-Entzerrung vermieden werden. In den Teilkanälen wird wieder das Verfahren mit getrennter Betrags- und Phasenentzerrung eingesetzt. Nach Konvergenz wird das Ausgangssignal des besseren Zweiges der Filterbank für die nachfolgende Decodierung ausgewählt. Dies kann z. B. über den Vergleich der zeitlich gemittelten quadrierten Fehlersignale der beiden blinden Entzerreralgorithmen in den Teilkanälen erfolgen.

**EP 0 921 664 B1**

**Patentansprüche**

1. Verfahren zur digitalen Nachrichtenübertragung, bei welchem digitale Signale sendeseitig mit einem festen Vorcodierer vorcodiert werden und bei welchem die Signale empfangsseitig durch Blindentzerrung zurückgewonnen werden, **dadurch gekennzeichnet, daß** die Blindentzerrung in eine Betragsentzerrung und in eine nachfolgende Phasenentzerrung aufgeteilt wird.

2. Verfahren nach Anspruch 1, **dadurch gekennzeichnet, daß** die Signale zunächst codiert werden.

3. Verfahren nach Anspruch 1 oder 2, **dadurch gekennzeichnet, daß** die Vorcodierung durch Dynamics Shaping modifiziert wird.

4. Verfahren nach einem der Ansprüche 1 bis 3, **dadurch gekennzeichnet, daß** eine Begrenzung der Dynamik der effektiven Sendesignale durchgeführt wird.

5. Verfahren nach einem der Ansprüche 1 bis 4, **dadurch gekennzeichnet, daß** zur Betragsentzerrung zunächst ein weißes Signal erzeugt wird, das anschließend gefärbt wird.

6. Verfahren nach einem der Ansprüche 1 bis 5, **dadurch gekennzeichnet, daß** zur Erzeugung des weißen Signals ein Prädiktionsfehlerfilter eingesetzt wird und daß das weiße Signal anschließend einem festen FIR-Filter aufgegeben wird.

7. Verfahren nach einem der Ansprüche 1 bis 4, **dadurch gekennzeichnet, daß** zur Betragsentzerrung die Korrelationsfolge direkt eingestellt wird.

8. Verfahren nach einem der Ansprüche 1 bis 7, **dadurch gekennzeichnet, daß** zur Phasenentzerrung der Sato-Algorithmus eingesetzt wird.

9. Verfahren nach einem der Ansprüche 1 bis 8, **dadurch gekennzeichnet, daß** die Blindenentzerrung in mindestens zwei getrennten Kanälen parallel zueinander durchgeführt wird.

10. Verwendung des Verfahrens nach einem der Ansprüche 1 bis 9 zur leitungsgebundenen digitalen Nachrichtenübertragung.


**Claims**

1. Method of digital message transmission, in which digital signals are precoded by a fixed precoder on the transmission side, and in which the signals are regained on the reception side by blind equalisation, **characterized in that** the blind equalisation is divided into absolute value equalisation and subsequent phase equalisation.

2. Method according to Claim 1, **characterized in that** the signals are first coded.

3. Method according to Claim 1 or 2, **characterized in that** the precoding is modified by dynamics shaping.

4. Method according to one of Claims 1 to 3, **characterized in that** a limitation of the dynamics of the effective transmitted signals is carried out.

5. Method according to one of Claims 1 to 4, **characterized in that** for absolute value equalisation, first a white signal is generated, and it is then coloured.

6. Method according to one of Claims 1 to 5, **characterized in that** to generate the white signal, a prediction error filter is used, and that the white signal is then given to a fixed FIR filter.

7. Method according to one of Claims 1 to 4, **characterized in that** for absolute value equalisation, the correlation sequence is used directly.

8. Method according to one of Claims 1 to 7, **characterized in that** for phase equalisation, the Sato algorithm is used.

9. Method according to one of Claims 1 to 8, **characterized in that** the blind equalisation is carried out in at least two separate channels parallel to each other.

10. Use of the method according to one of Claims 1 to 9 for line-connected digital message transmission.


**Revendications**

1. Procédé de transmission d'information numérique, dans lequel des signaux numériques sont précodés au niveau de l'émetteur par un précodeur fixe et dans lequel les signaux sont récupérés au niveau du récepteur au moyen d'une égalisation aveugle, **caractérisé en ce que** l'égalisation aveugle est divisée en une égalisation de module et une égalisation de phase consécutive.

2. Procédé selon la revendication 1, **caractérisé en ce que** les signaux sont d'abord codés.

3. Procédé selon la revendication 1 ou 2, **caractérisé en ce que** le précodage est modifié par le procédé Dynamics Shaping (remise en forme de la dynamique).

4. Procédé selon l'une quelconque des revendications 1 à 3, **caractérisé en ce qu'**il est effectué une limitation de la dynamique des signaux émis efficaces.

5. Procédé selon l'une quelconque des revendications 1 à 4, **caractérisé en ce que**, pour l'égalisation de module, il est d'abord généré un signal blanc qui est ensuite coloré.

6. Procédé selon l'une quelconque des revendications 1 à 5, **caractérisé en ce que** l'on met en oeuvre un filtre d'erreur de prédiction pour générer le signal blanc et **en ce que** le signal blanc est ensuite transmis à un filtre à réponse impulsionnelle finie fixe.

7. Procédé selon l'une quelconque des revendications 1 à 4, **caractérisé en ce que**, la suite de corrélation est réglée directement pour l'égalisation de module.

8. Procédé selon l'une quelconque des revendications 1 à 7, **caractérisé en ce que** l'algorithme de Sato est mis en oeuvre pour l'égalisation de phase.

9. Procédé selon l'une quelconque des revendications 1 à 8, **caractérisé en ce que** l'égalisation aveugle est exécutée en parallèle dans au moins deux canaux séparés.

10. Utilisation du procédé selon l'une quelconque des revendications 1 à 9 pour la transmission d'information par câble.

Fig. 1

Fig. 2

Fig. 3